# EUROPEAN PATENT APPLICATION

(11) **EP 3 038 326 A1**
(43) Date of publication of application: **29.06.2016**
(21) Application number: 14307119.9
(22) Date of filing: 22.12.2014
(51) Int. Cl.: H04L 29/08, H04W 8/00, H04W 48/14, H04W 48/16, H04L 12/24, G06F 17/30

(54) **Method, devices, system and corresponding computer program for service discovery**

(71) Applicant: Orange, 75015 Paris (FR)
(72) Inventor: Macuha, Martin, 81102 - Bratislava (SK); Derham, Thomas, Tokyo, Tokyo 194-0022 (JP)
(74) Representative: Vidon Brevets & Stratégie

(57) **Abstract**

According to an embodiment of the invention, a method for service discovery in a wireless communication network comprising at least one service searching device capable of obtaining contents of a service is provided. Such a method comprises:
- Receiving, via a communication interface of said service searching device, validity information of said service and said service contents;
- storing, in a memory of said service searching device, said service contents and said validity information;
- determining, as a function of said validity information, whether said stored service contents may be used as a substitute to a result of a service discovery process of said service, and
- using said stored service contents as said substitute, in the affirmative.

## Description

### 1. Technical Field

The invention relates to service discovery in a wireless communication network. More specifically, the invention relates to a method for improving the efficiency of service discovery in a wireless communication network.

### 2. Background

Personal smart devices and other devices are able to discover and interact with digital services hosted by objects in the vicinity by utilizing wireless communication capabilities. An example method for discovering and interacting with the services is Wi-Fi Direct pre-association service discovery specified by Wi-Fi Alliance^{®}. Similarly, 3rd Generation Partnership Project (3GPP) proposes Proximity Services (ProSe) feature to enable direct service discovery between devices with LTE cellular connectivity (also called User Equipment (UE)).

This process of discovering services served on the surrounding devices and objects does not often require the devices or objects to associate with each other or to establish mutual connection. An example of valuable discovered services could be a projector and printer in the company office. Yet, with very rapidly increasing number of services as well as devices to be discovered, the discovery procedures occupy significant amount of very limited resources of the wireless spectrum, while many services might not provide additional information to the previously collected information. Taking the aforementioned example, the office worker's smart device might be well aware of the printer device from the previous service discovery procedure and any further service discovery (e.g. when re-entering the communication range) might be redundant and wasteful of wireless spectrum resource.

The services discovered directly over wireless communication channels are also providing great benefit in terms of the precise presence detection given by the wireless communication channel properties and propagation of the wireless signal in the environment. An example of the service benefiting from the range could be a store or a restaurant, which is trying to attract pedestrians passing their brick-and-mortar shop. Yet, the wireless communication range of many technologies for service discovery is very limited, which might be inefficient or prohibitive by nature for some services, which relevance is much broader. Taking the aforementioned example, the restaurant might wish to offer its service in broader scale, ranging up to the nearby subway station.

In the draft standard *IEEE P802.11ai™*/*D3.0 (8.4.2.172 CAG Number element),* a method using CAG (Common ANQP (Access Network Query Protocol) Group) is proposed to prevent unnecessary service query request.

ANQP is a protocol used by IEEE 802.11 networks to exchange information about the network, devices or services and it is also used by Wi-Fi Alliance^{®} to carry encapsulated well known service discovery protocols, such as UPnP or Bonjour. According to this standard, CAG is a group of ANQP elements, which do not change on a rapid basis. Each ANQP element can for example represent a service and its contents. The CAG Number element is optionally present in the Beacon or Probe Response frame and it provides the current version number of the CAG. The CAG Number element advertised by the access point is cached and used by the other devices to determine if a change in any of the ANQP elements (e.g. services) included in the CAG group occurred from the previous entrance of the communication range of the access point. If the CAG Number did not change since the previous time, the information in the ANQP elements (which are grouped in the CAG), has not changed. Therefore, the further ANQP exchanges for the grouped ANQP elements are not needed.

However, the aforementioned method can't be extended to other use cases, where pre-association service discovery plays important role, such as use cases for proximity services. In those scenarios, there might be situations with numerous services with different pace of content changing (e.g. printing service (very static), advertising applications on the smartphone (might change over longer periods), events (daily, weekly or monthly changing), traffic lights or crowd sensor (ever-changing information)). With only one set (group) of services and without differentiation of the changing (or expiration) period, the CAG information can't provide enough fine-grained information to significantly increase efficiency of the service discovery of proximity services.

Another limitation of the CAG is that the service searching device can determine validity of the content only from the CAG Number element (e.g. by listening to the beacon). Therefore, the service validity is unknown to the device prior to the retrieval of this element (e.g. when the devices are not within their communication range).

It would hence be desirable to provide a method for improving the efficiency of service discovery in a wireless network, which would not show the drawbacks of the prior art.

### 3. Summary

According to an embodiment of the invention, a method for service discovery in a wireless communication network comprising at least one service searching device capable of obtaining contents of a service is provided. Said method comprises:
- Receiving, via a communication interface of said service searching device, validity information of said service and said service contents;
- storing, in a memory of said service searching device, said service contents and said validity information;
- determining, as a function of said validity information, whether said stored service contents may be used as a substitute to a result of a service discovery process of said service; and
- using said stored service contents as said substitute, in the affirmative.

Hence, when the stored contents are still valid, the device does not have to proceed to a service discovery process for obtaining service contents; the stored service contents can be used as a result of the service discovery process by the service searching device or by any other device connected in the network. Therefore, the method can avoid unnecessary service discovery process and improve the utilization efficiency of wireless spectrum resources. Moreover, the method enables to continue offering services even if the service searching device is no longer situated in the zone of coverage of the service hosting device.

In an additional embodiment, the service contents are received along with said validity information via said communication interface.

Therefore, the validity information can be known as soon as the service contents are received.

In an additional embodiment of the present invention, the using step of the method comprises stopping a service discovery process.

Therefore, the method cannot only avoid proceeding to unnecessary service discovery process, but also stop the service discovery process that has already started.

In an additional embodiment, the using is triggered by a failure of a service discovery process.

When a service discovery process fails, the stored service contents will be directly used as the result of the service discovery process regardless of the validity of the service contents. Therefore, the user experience of the service is improved. In other words, in the case where a service discovery process fails, the determining step may lead to deciding that it is interesting to use the stored service contents as a substitute to the result of the failed service discovery process, whatever the associated validity information.

In an additional embodiment, the method comprises determining a nature of the service according to the service contents, a type of a service hosting device and/or a protocol used by said service discovery process.

The nature of the service can be for example static or dynamic. It can serve to determine or estimate the validity of the service contents.

In an additional embodiment, the method also comprises providing said substitute to an entity, which belongs to a group comprising:
- applications of said service;
- network management systems; and
- other service searching devices.

Therefore, the stored service contents can be used not only by the corresponding service application on the service searching device, but also by other service searching devices or network management systems that expect to receive a result of a service discovery process of the service. In this embodiment, it can be seen that the "source" of the service contents of a specific service can also be any service searching device in the network. The service contents can be obtained from different sources. The reliability of the service is therefore improved.

In an additional embodiment of the invention, the service contents are obtained by:
- a regular service discovery process;
- manually inserting by a user;
- programmatically inserting by a program developer; or
- downloading from a remote information source.

In an additional embodiment of the invention, the validity information comprises at least one piece of information in the following group:
- nature of said service: static or dynamic;
- validity time of said contents;
- validity time of said service;
- a flag indicating if said service will expire with said contents.

The pieces of information in the group can serve to make the decision of storing and reusing the service contents as a substitute for the future service discovery process of the service.

In an additional embodiment of the invention, the validity information is received in an extended field, called Service and Content Validity Indicator (SCVI), of a service discovery message.

Therefore, the validity information can be transmitted by an existing service discovery message. The method is compatible with current infrastructure of wireless networks.

In another aspect, the present invention relates to a service searching device capable of obtaining contents of a service, the service searching device comprising:
- a communication interface being configured to receive validity information of said service and service contents;
- a memory for storing said service contents and said validity information;
- a module for determining, as a function of said validity information, whether said stored service contents may be used as a substitute to a result of a service discovery process of said service; and
- a module for using said stored service contents as said substitute.

The present invention also relates to a service hosting device capable of providing contents of a service, the service hosting device comprising a wireless communication interface being configured to transmit validity information of said service and said service contents.

Furthermore, the invention concerns a service discovery system characterized in that it comprises:
- at least one service hosting device capable of providing contents of a service, comprising a wireless communication interface being configured to transmit validity information of said service and said service contents.
- at least one service searching device capable of obtaining said service contents, comprising:
   - a communication interface being configured to receive said validity information;
   - a memory for storing service searching device, said service contents and said validity information, in function of said validity information;
   - a module for determining, as a function of said validity information, whether said stored service contents may be used as a substitute to a result of a service discovery process of said service;
   - a module for using said stored service contents as said substitute.

Besides, another object of the invention relates to a computer program that comprises program code instruction for the implementation of the method for service discovery of the invention, when the program is executed by a processor.

The information medium may be any entity or device capable of storing the program. For example, the medium can comprise a storage means, such as a ROM, for example a CD ROM or a microelectronic circuit ROM, or else a magnetic recording means, for example a diskette or a hard disk.

In addition, the information medium may be transmissible such as an electrical or optical signal, which may be conveyed via an electrical or optical cable, by radio or by other means. The program according to the invention may in particular be downloaded from a network of Internet type.

### 4. Brief description of the drawings

The invention can be better understood with reference to the following description and drawings, given by way of example and not limiting the scope of protection, and in which:
- Figure 1 illustrates service searching devices and service hosting devices in a wireless communication network in which the method for service discovery of the invention is implemented;
- Figure 2 illustrates the structure of a service searching device and a service hosting device;
- Figure 3 shows a flow chart illustrating the method for service discovery of the invention.
- Figure 4 shows the structure of ANQP Query response frame in the prior art;
- Figure 5 shows the structure of ANQP Query response frame with an extended field called Service and Content Validity Indicator (SCVI) according to the invention;

The components in the figures are not necessarily to scale, emphasis instead being placed upon illustrating the principles of the invention.

### 5. Detailed description

### 5.1. General principles

The present disclosure provides a method for discovering services offered by service hosting devices in the vicinity without a need to successfully complete the procedure of service discovery with the wireless communication technology.

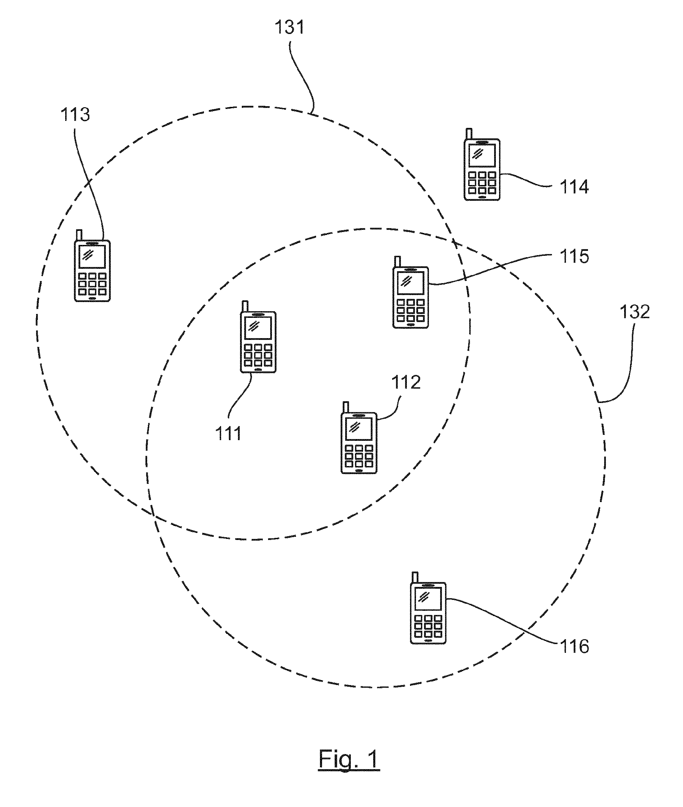

**Figure 1** illustrates a wireless communication network comprising several devices with numeral references 111 to 116. In the embodiment of figure 1, devices 111 and 112 may behave as service hosting devices. Dotted-line circles 131 and 132 represent the service discovery ranges of the services offered by the two service hosting devices 111 and 112. Devices 113 to 116 behave as service searching devices: devices 113 and 115 are located within the service discovery range of service hosting device 111, while devices 115 and 116 are located within the service discovery range of service hosting device 112. Service hosting devices 111 and 112 may also behave as service searching devices: as a mere example, devices 111 and 112 may be two smartphones with multi-player game application, where each smartphone 111, 112 advertises the existence of the application and player's profile.

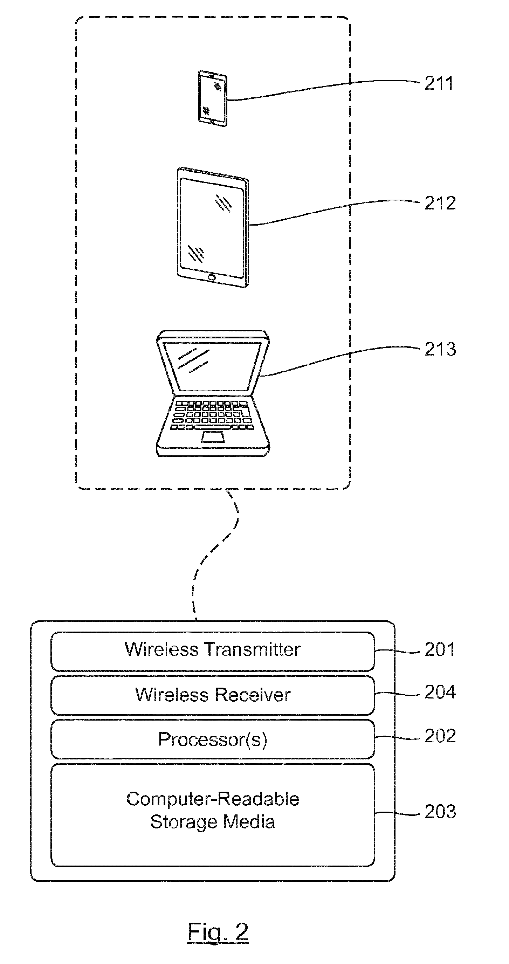

**Figure 2** shows the structure of a digital service searching device that is capable of communicating data, packets, and/or frames over a wireless communication interface comprising a wireless transmitter 201 and a wireless receiver 204. Digital service searching devices can be smart-phones 211, tablet computers 212, laptop computers 213 or gaming consoles for example. These devices are capable of executing service discovery procedure, and have processors 202 with computational capability as well as computer-readable storage media 203 to store the information about the discovered service.
**Figure 2** can also show the structure of a digital service hosting device that is capable of communicating data, packets, and/or frames over a wireless communication interface comprising a wireless transmitter 201 and a wireless receiver 204. Digital service hosting devices can be smart-phones 211, tablet computers 212, laptop computers 213 or gaming consoles for example. The digital service hosting device is compatible with the service discovery procedure and has processor 202 with computational capability as well as computer readable storage media 203 to store information about the service that it provides.

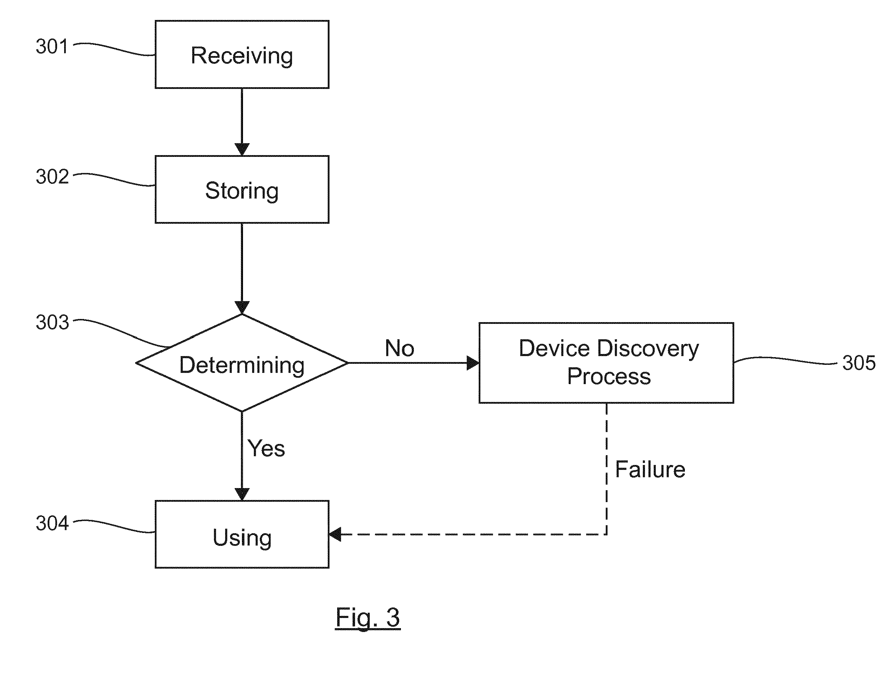

**Figure 3** illustrates the steps of a method for service discovery in a wireless communication network according to an embodiment of the invention. As shown in Figure 1, the wireless communication network can comprise service searching devices, and service hosting devices. The service searching devices are capable of obtaining contents of a service. The service contents can be obtained via regular service discovery procedure over wireless communication radio or by other means, possibly by manually inserting by the device user, programmatically inserting by a program developer or for example provided from a remote information source.

As illustrated in **Figure 3****,** the method comprises:
- receiving 301, via a communication interface 201 of the service searching device, validity information of the service and the service contents;
- storing 302, in a memory of the service searching device, the service contents and the validity information;
- determining 303, as a function of the validity information, whether the stored service contents may be used as a substitute to a result of a service discovery process of the service; and
- using 304 the stored service contents as the substitute, in the affirmative;
- In the negative, a regular service discovery process of the service 305 may be executed. If this regular service discovery process fails, the stored service contents can be directly used 304 with respect to the service contents and consideration of the impact on the user experience of the possibly false, invalid or misleading information being discovered.

Actually, information, which is not marked as valid, but has been found in the past, might be very useful in some cases, as it can virtually increase service discovery reliability (in case the service and the actual service content are valid).

In one example embodiment of the invention, the user device has discovered printer in the office in the past and the service contents validity time just expired. In case that a new service discovery procedure fails (e.g. due to poor signal), user could be provided the previously found and currently expired information. This will greatly help him access the printer service.

On the other hand, there might be situations, in which the service contents found in the past and currently expired should not be provided during the service discovery process.

The validity information received in the step 301 can comprise a piece of information on the nature of the obtained service contents or the service itself, a piece of information indicating if the actual service information might expire over certain timeframe depending on the service content. This knowledge about the nature of the service contents can be indicated within the information, which is provided via the service discovery procedure or could be evaluated based on the service contents itself, type of a discovered device, service discovery protocol used or some other information.

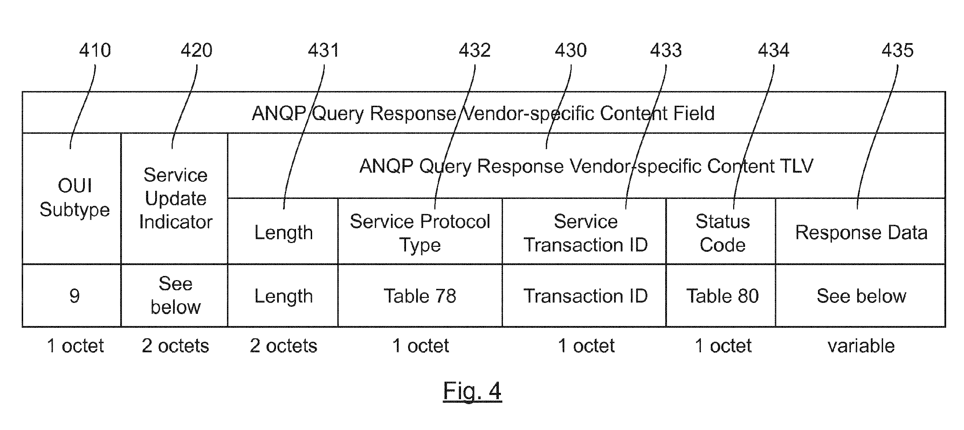

**Figure 4** shows the structure of ANQP Query Frame in prior art, which comprises a OUI type field 401, a service Update Indicator field 420 and ANQP Query Response Vendor-Specific content TLV (Type-Length-Value) 430 comprising a Length field 431, a service Protocol Type field 432, a Service Transaction ID field 433, a Status Code field 434 and a Response Data field 435. The service contents nature could be directly indicated as part of the service discovery procedure by extending the service discovery process defined in Wi-Fi P2P Technical specification. In particular, Wi-Fi P2P Technical Specification's Service Discovery Query and Response messages use GAS Initial Request and Response frames, respectively. These frames contain the fields shown in Figure 4. The ANQP Query Response frame provides actual service contents in its Query Data field 435 in the form and structure, which depends on the encapsulated service discovery protocol.

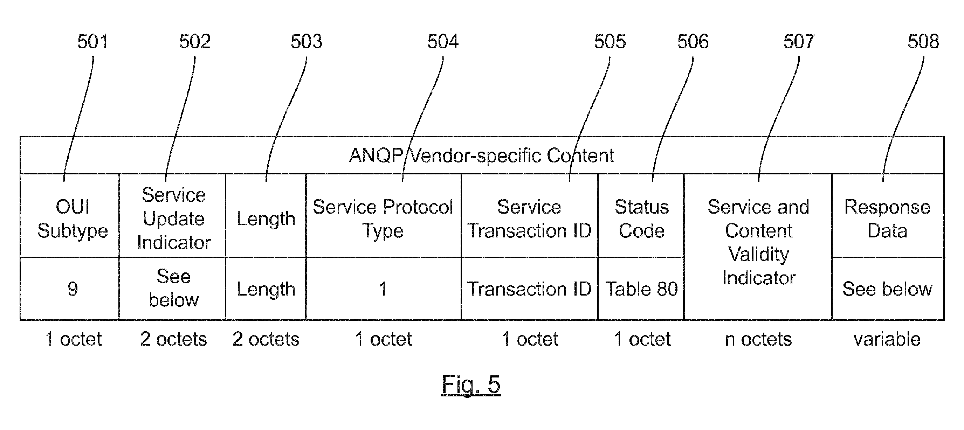

**Figure 5** shows the structure of an extended ANQP Query Response Frame according to an embodiment of the invention. The extended ANQP Query Response frame comprises the same fields (OUI type 501, service Update Indicator 502, Length 503, service Protocol Type 504, Service Transaction ID 505, Status Code 506 and Response Data 508) as the frame of prior art shown in Figure 4. In addition, it is extended with an additional field of nominal size, hereafter named Service and Content Validity Indicator (SCVI) 507, which indicates the validity information of the service contents and/or the service. The validity information may comprise static or dynamic nature of the content and service itself. It can also include the knowledge about the content validity time such as the content creation time, content expiration time or content validity duration. Besides, the SCVI field 507 can include a piece of flag information indicating whether the service itself will expire with the content (i.e. ephemeral service) or the service will continue and only service content will expire (e.g. will be updated) after the indicated time value. The SCVI field 507 could be used by the service searching device to decide to store the service information and re-use this information as a substitution for the future service discovery process of the same service.

The SCVI value can be determined by the service owner or service creator/publisher, wherein the decision making process includes information about the content of the service, type of the service, type of the device which is serving the service, type of the target device to discover the service and/or an expected interaction. For example, the service operator can deploy various embedded devices with services in the city environment, and indicate the SCVI value based on the expected service content update times and other information. In another example, the service can be provided in the form of the application on the personal smart device and the application developer can decide to utilize this SCVI field 507 based on a service content, an expected usage of the service (e.g. developer created application for smart home to be installed on the device located within the user's home) and a targeted device type (e.g. device which is powered by the external source in order to have service constantly running).

After the obtained service information is stored (e.g. in the service searching device) and this information is accessible to the service searching device, the service searching device might use the SCVI field value to determine whether the stored service information can be used as a substitute for the result content of the service discovery process. Then, an event substituting the service discovery can be triggered when the service is identified to be relevant.

### 5.2. Detailed embodiments

Various embodiments will now be described more fully hereinafter. However, many different forms may be provided and should not be construed as limited to the embodiments set forth herein. Rather, these embodiments are provided so that this disclosure will be thorough and complete, and will fully convey the scope of various embodiments to those skilled in the art.

One example embodiment of utilizing the SCVI field could be a printing service on the printer device at the company office, which supports Internet Printing Protocol (IPP). When an office worker comes with his/her personal device close to the printer or office's wireless network, the information about the support of printing service is exchanged in the form of ANQP Query and Response Frames with encapsulated Bonjour service discovery protocol messages with a DNS name "_ipp._tcp.local" and Response Data with the printer instance (e.g. CompanyOfficePrinter._ipp._tcp.local). As the printing service does not change on frequent basis (e.g. only when a printer is replaced with a new one or when printer is under maintenance), it can be explicitly indicated in the SCVI field that this information (i.e. service contents with printing service info) is static. When the office worker's personal device enters proximity of the printer device, discovered information can be stored on the personal device and used to substitute the service discovery processes in the future. Actually, as the service is static, there is no need to launch a service discovery process each time the office worker comes close to the printer, since the service content does not change. The service discovery process is launched only once: the service contents, along with the associated validity information (which indicates that the service is of static nature), are stored in a memory of the user's station (mobile handset or laptop computer for example). When the office worker needs to use the printing service, its station uses the stored service contents, rather than launching a new service discovery process, which is much more efficient and preserves wireless spectrum resources.

In another embodiment, the knowledge from the passive scan procedure (i.e. device is in the listening phase and detects the public management frame, known as a beacon) can be used to determine the proximity of the already known service (i.e. service, which was discovered and stored in the past service discovery procedure). In particular, the device receives broadcasted beacon and compares the identifier (e.g. physical address) of the beacon's originating device with the identifier of the stored service(s) hosting device. If those identifiers match, the service searching device can expect the presence of the stored service. The stored service contents can be used as a substitute for the service discovery process. Then, the stored information is provided to the user or to the entity expecting the result from the service discovery procedure. The active scanning procedure (i.e. the device transmitting the public management frames known as probe requests and expecting probe replies from the devices within the communication range) as well as service discovery process is not executed, thus resulting in saving the wireless spectrum resources as well as energy resources of the discovering device.

Yet, in another example embodiment, the active scanning procedure (i.e. the device transmitting the public management frames known as probe requests and expecting probe replies from the devices within the communication range) is executed and it is followed by the service discovery procedure. However, the service discovery might fail to complete the discovery process due to the various reasons such as devices mobility, timing and order of social channel scanning. The result of the active scan can be used to compare the devices in the vicinity and the devices hosting the previously found services, which are stored on the device. If the device in the vicinity is matching the stored service hosting device, the stored service contents can be used as a substitute for the service discovery process. Then, the stored information can be provided to the user or to the entity expecting the result from the service discovery procedure. The reliability of the service discovery process is virtually increased, resulting in the higher quality of experience for the user.

And yet, in another example embodiment, the current existence of the previously discovered and stored service can be estimated by prediction techniques, among which tracking; relational graph of previously discovered services, connected devices and networks, location and coordinates, behavioral patterns, gestures, mobility and sensor reading correlations; machine learning; forecasting; filtering and estimation techniques. The service searching device can determine the presence of the stored service by the above mentioned techniques and the stored information from the past service discovery can be used to determine whether the estimated service is still valid and whether the service content previously discovered is also valid.

In case that the service discovered in the past is not valid anymore (e.g. service previously indicated in the SCVI field that the service itself expires along with the content validity time, which has already passed), a service searching device might not execute the service discovery process for the stored service. In this case, since the service is no longer valid based on the stored information, it would be likely inefficient and resource-wasteful to proceed to a service discovery process and skipping of the process can therefore avoid futile effort. For example, a food stall at Christmas markets can advertise its presence and its menu within certain period (e.g. prior to Christmas holidays), and after this period elapses, the service with its content is not available anymore. User is passing the square in the city center in December and discovers information about menu of the food stalls selling traditional specialties. The user's device stores this information including expiration time of this offer and information that the service itself (i.e. food stalls) will expire along with the service content (i.e. food stall menu). When user is passing the same square in January, the user's device can use machine learning, tracking and prediction techniques to determine the proximity of the food stall service. However, as the service itself has already expired, it will not execute the service discovery procedure and the user will not be notified of the existence of the food stall service.

In case that the service discovered in the past is valid, however, the content is not valid anymore (e.g, service previously indicated that the service itself does not expire along with the content validity time, which has already passed), a service searching device might decide to initiate the regular service discovery process (e.g. when in the proximity of the expected service) in order to update the content information about the service. For example, a fast-food chain might offer its daily lunch menu advertising service, in which the content validity expires after certain period (e.g. lunch menu information after 2pm in the afternoon), while advertising service is still available with updated content. User is passing by the fast-food restaurant around noon and receives a lunch menu offer. This information is stored in the user's device and includes the validity period of the lunch menu offer until 2pm as well as it is indicated that the advertised fast-food service will not expire with the expiration of the lunch menu offer. When the user passes this restaurant again one hour later, the user's device can determine the proximity of the fast-food service by the passive scan procedure and listening to the beacons which are broadcasted by the same device, which previously advertised lunch menu offer. As previously received lunch menu offer is still valid, there is no need to execute new service discovery process. When the user passes the same restaurant after 2pm, the lunch menu is not offered anymore and the user's device executes new service discovery in order to retrieve afternoon menu offer. In case that the service discovered in the past is valid as well as content information is valid, then a stored information can be provided to the user or to the entity expecting the result from the service discovery procedure. This process could be executed regardless of device being within the communication range of the actual service and therefore, by this procedure, the relevance of the service can be more precisely addressed compared to the limitations of the wireless communication range, resulting for example in virtually extended service discovery range.

For example, a coffee shop, which is located 500m from the train station, is offering a discount coupon service by broadcasting this information by wireless technology within 50m from the shop. User exits the train station and then passes by this store and user's device discovers the information about the discount coupon and user decides to use this service. Also, the service contents as well as validity of the content are stored in the user's device. Next time, when this user exits the train station, the user's device determines high relevance of the service, for example by prediction or by positioning and tracking techniques. Also, the user's device confirms a validity of the content in its own storage. Then, the discount coupon can be shown to the user immediately.

## Claims

1. A method for service discovery in a wireless communication network comprising at least one service searching device capable of obtaining contents of a service, said method comprising:
- Receiving, via a communication interface of said service searching device, validity information of said service and said service contents;
- storing, in a memory of said service searching device, said service contents and said validity information, as a function of said validity information;
- determining, as a function of said validity information, whether said stored service contents may be used as a substitute to a result of a service discovery process of said service; and
- using said stored service contents as said substitute, in the affirmative.

2. The method according to claim 1, **characterized in that** said service contents are received along with said validity information via said communication interface.

3. The method according to claim 1 or 2, **characterized in that** said using comprises stopping a service discovery process.

4. The method according to claim 1 or 2, **characterized in that** said using is triggered by a failure of a service discovery process.

5. The method according to any preceding claim, **characterized in that** it comprises determining a nature of said service according to said service contents, a type of a service hosting device and/or a protocol used by said service discovery process.

6. The method according to any preceding claim, **characterized in that** it comprises providing said substitute to an entity which belongs to a group comprising:
- applications of said service;
- network management systems; and
- other service searching devices in said network.

7. The method according to any preceding claim, **characterized in that** said service contents are obtained by:
- a regular service discovery process;
- manually inserting by a user;
- programmatically inserting by a program developer; or
- downloading from a remote information source.

8. The method according to any preceding claim, **characterized in that** said validity information comprises at least one piece of information in the following group:
- nature of said service: static or dynamic;
- validity time of said contents;
- validity time of said service;
- a flag indicating if said service will expire with said contents.

9. The method according to claim 8, **characterized in that** said validity information is received in an extended field, called Service and Content Validity Indicator (SCVI), of a service discovery message.

10. A service searching device capable of obtaining contents of a service, **characterized in that** it comprises:
- a communication interface being configured to receive validity information of said service and service contents;
- a memory for storing said service contents and said validity information;
- a module for determining, as a function of said validity information, whether said stored service contents may be used as a substitute to a result of a service discovery process of said service; and
- a module for using said stored service contents as said substitute.

11. A service hosting device capable of providing contents of a service, **characterized in that** it comprises a wireless communication interface being configured to transmit validity information of said service and said service contents.

12. A service discovery system **characterized in that** it comprises:
- at least one service hosting device capable of providing contents of a service, comprising a wireless communication interface being configured to transmit validity information of said service and said service contents;
- at least one service searching device capable of obtaining said service contents, comprising:
- a communication interface being configured to receive said validity information;
- a memory for storing said service contents and said validity information;
- a module for determining, as a function of said validity information, whether said stored service contents may be used as a substitute to a result of a service discovery process of said service;
- a module for using said stored service contents as said substitute.

13. Computer program **characterized in that** it comprises program code instruction for the implementation of the steps of the method of any of claims 1 to 9 when the program is executed by a processor.
